# DEMANDE DE BREVET EUROPEEN

(11) **EP 2 930 657 A1**
(43) Date de publication de la demande: **14.10.2015**
(21) Numéro de dépôt: 15162804.7
(22) Date de dépôt: 08.04.2015
(51) Int. Cl.: G06K 9/00, B61L 23/04

(54) **PROCÉDÉ DE DÉTECTION DE RAILS SUR LESQUELS CIRCULE UN VÉHICULE FERROVIAIRE**

(30) Priorité: 08.04.2014 FR 1453124
(71) Demandeur: ALSTOM Transport Technologies, 92300 Levallois-Perret (FR); UTC (Universite de Technologie de Compiegne), 60203 Compiegne cedex (FR); Centre National de la Recherche Scientifique (C.N.R.S.), 75016 Paris (FR)
(72) Inventeur: Le Bastard, Jean, 78000 VERSAILLES (FR); Fremont, Vincent, 60150 LE PLESSIS-BRION (FR)
(74) Mandataire: Blot, Philippe Robert Emile

(57) **Abrégé**

Le procédé comporte une étape (100) de capture d'une image prise en extrémité dudit véhicule ferroviaire, une étape (110) de détection de contours sur ladite image, une étape (130) de génération de lignes, correspondant sensiblement aux contours détectés sur ladite image, et une étape (150) de recherche, parmi les lignes générées, d'une paire de lignes (26) séparées l'une de l'autre d'une distance prédéfinie.

## Description

La présente invention concerne un procédé de détection de rails sur lesquels circule un véhicule ferroviaire, notamment un tramway.

Divers procédés de détection de rails sont déjà connus dans l'état de la technique. Toutefois, de tels procédés sont habituellement mis en oeuvre au moyen de dispositifs dédiés relativement complexes. En outre, lorsqu'il est souhaité d'utiliser la détection de rails pour une autre application, notamment la détection de déraillement, il est généralement nécessaire de disposer d'équipements supplémentaires.

L'invention a notamment pour but de remédier à ces inconvénients, en proposant un procédé de détection de rails relativement simple à mettre en oeuvre, et ne nécessitant pas de dispositif complexe notamment pour la détection de déraillement.

A cet effet, l'invention a notamment pour objet un procédé de détection de rails sur lesquels circule un véhicule ferroviaire, caractérisé en ce qu'il comporte :
- une étape de capture d'une image prise en extrémité dudit véhicule ferroviaire,
- une étape de détection de contours sur ladite image,
- une étape de génération de lignes, correspondant sensiblement aux contours détectés sur ladite image,
- suite à l'étape de génération de lignes, une étape de groupement de lignes proches et similaires entre elles, chaque groupement de ligne étant remplacé par une ligne représentative, et
- une étape de recherche, parmi les lignes générées, et notamment les lignes représentatives, d'une paire de lignes séparées l'une de l'autre d'une distance prédéfinie.

Un tramway est généralement équipé d'une caméra effectuant une prise de vue à chaque extrémité de ce tramway. L'étape de capture d'image peut être réalisée par cette caméra pour ainsi ne pas nécessiter d'équipement supplémentaire.

Les autres étapes du procédé peuvent être réalisées au moyen d'une unité informatique, simple à mettre en oeuvre.

Le procédé selon l'invention permet d'obtenir une détection précise de la position des rails. Il suffit alors par exemple de comparer cette position détectée avec une position attendue, pour ainsi détecter un déraillement en cas de discordance entre ladite position détectée et ladite position attendue.

Un procédé de détection selon l'invention peut comporter en outre l'une ou plusieurs des caractéristiques suivantes, prises seules ou selon toutes combinaisons techniquement envisageables :
- L'image est capturée à partir d'une vidéo filmée en avant du véhicule ferroviaire.
- Le procédé comporte, suite à l'étape de capture d'image, et préalablement à l'étape de détection de contours, une étape de conversion de l'image capturée en niveaux de gris.
- L'étape de détection de contours est réalisée par l'application d'un filtre de Canny à l'image.
- L'étape de détection de contours est réalisée par l'application d'un filtre orientable à l'image.
- Le procédé comporte, suite à l'étape de détection de contours, une étape de sélection de points, correspondant aux contours détectés, telle que les points sélectionnés sont des groupes de points alignés sensiblement verticalement, la génération de lignes étant réalisée sur la base des points sélectionnés.
- La ligne représentative, remplaçant chaque groupement de lignes, est une ligne réalisée à partir du plus grand nombre de points sélectionnés.
- Le procédé comporte, suite à l'étape de recherche, une étape de vérification de la rectitude des lignes de la paire de ligne.
- Le procédé comporte, en outre, une étape de comparaison de la paire de lignes avec une paire de lignes issue d'une image capturée précédemment à laquelle aura été appliqué le même procédé de détection.
- Le procédé comporte une étape de comparaison de la paire de lignes avec des données prédéfinies, correspondant à une position attendue pour les rails.
- Le procédé comporte une étape de détection d'obstacle, et, en cas d'obstacle détecté, une étape de comparaison de la position de l'obstacle détecté avec la paire de lignes.

L'invention concerne également un dispositif de détection de rails destiné à équiper un véhicule ferroviaire circulant sur ces rails, le dispositif comportant une caméra propre à capturer au moins une image en extrémité du véhicule ferroviaire, caractérisé en ce qu'il comporte :
- des moyens de détection de contours sur une image capturée,
- des moyens de génération de lignes, correspondant sensiblement aux contours détectés, sur ladite image, et
- des moyens de recherche, parmi les lignes générées, d'une paire de lignes sensiblement parallèles et séparées l'une de l'autre d'une distance prédéfinie.

L'invention sera mieux comprise à la lecture de la description qui va suivre, donnée uniquement à titre d'exemple et faite en se référant aux figures annexées, parmi lesquelles :
- la figure 1 représente schématiquement les étapes d'un procédé de détection selon un exemple de mode de réalisation de l'invention ;
- la figure 2 représente schématiquement une image capturée, prise en avant d'un véhicule ferroviaire, au cours de l'étape de capture d'image du procédé de détection de la figure 1 ;
- la figure 3 représente l'image de la figure 2, au cours d'une étape ultérieure du procédé de détection de la figure 1.

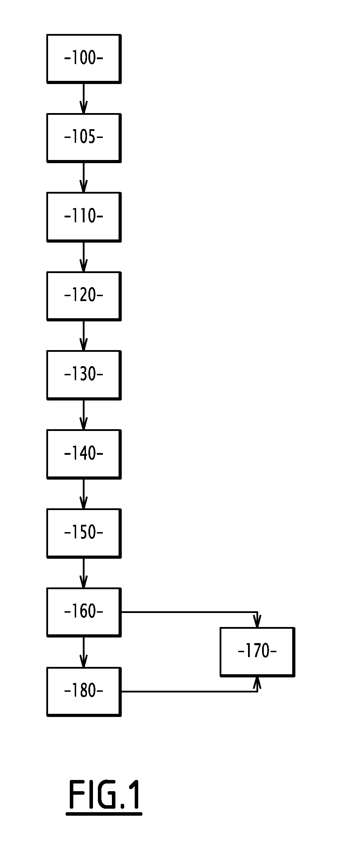

On a représenté sur la figure 1 les étapes d'un procédé de détection de rails sur lesquels circule un véhicule ferroviaire, selon un exemple de mode de réalisation de l'invention. Un tel procédé est particulièrement adapté à un tramway, mais pourrait être appliqué à tout type de véhicule ferroviaire.

Le procédé de détection comporte tout d'abord une étape 100 de capture d'une image, prise en extrémité dudit véhicule ferroviaire, par exemple en avant du véhicule. A cet effet, le véhicule ferroviaire est équipé d'une caméra, agencée pour effectuer des prises de vue vers l'avant du véhicule. Certains véhicules ferroviaires, notamment certains tramways, comportent déjà classiquement une telle caméra, qui pourra donc être utilisée pour la mise en oeuvre du présent procédé de détection. Bien entendu, il est également envisageable de prendre des images en arrière du véhicule.

Plus particulièrement, la caméra capture une vidéo, dont sont extraites les images objet du procédé à un instant donné.

Il est à noter qu'il est possible de capturer des images à intervalles réguliers, pour appliquer les étapes ultérieures du présent procédé à chacune de ces images. Lorsque ces intervalles réguliers sont relativement courts, il est ainsi possible d'observer l'évolution de la position des rails détectés, comme cela sera décrit ultérieurement.

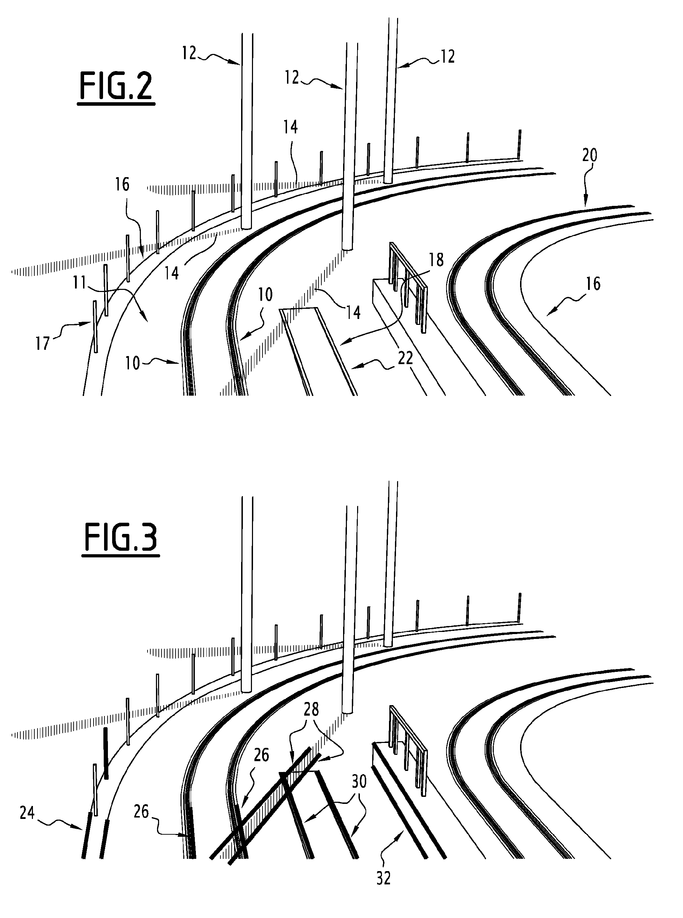

On a représenté sur la figure 2 un exemple d'image capturée au cours de l'étape de capture d'image 100. On a notamment représenté sur cet exemple d'image :
- des rails 10 sur lesquels circule le véhicule ferroviaire, intégrés dans une chaussée 11,
- des poteaux 12, notamment destinés à porter des caténaires d'alimentation du véhicule ferroviaire,
- des ombres 14 que font les poteaux 12 sur la chaussée 11,
- des bords 16 de la chaussée 11, équipés de barrières dont des montants 17 sont représentés,
- un quai 18, également muni de barrières de sécurité,
- des rails opposés 20, sur lesquels un autre véhicule ferroviaire est susceptible de circuler en sens inverse, et
- divers autres rebords 22 ménagés sur le quai 18.

Dans le cas où l'image capturée est en couleur, le procédé de détection comporte avantageusement une étape 105 de conversion de l'image capturée en niveaux de gris. En effet, une image en niveaux de gris est particulièrement adaptée à certains traitements d'image, notamment à la détection de contours.

Ainsi, le procédé de détection comporte ensuite une étape 110 de détection de contours sur ladite image, notamment sur l'image en niveaux de gris, les contours correspondant à des pixels de fort gradient.

Cette étape de détection de contours 110 peut être réalisée par toutes méthodes connues en soi. Par exemple, l'étape de détection de contours 110 est réalisée par l'application d'un filtre de Canny à l'image en niveaux de gris.

Conformément à une variante préférée, l'étape de détection de contours 110 est réalisée par l'application d'un filtre orientable (appelé « Steerable Filter » en anglais) à l'image. Un tel filtre orientable, connu en soi, permet une meilleure sélection de contours intéressants parmi tous les contours de l'image pour un intervalle d'orientations donné.

L'étape de détection de contours 110 permet de déterminer des points correspondants aux contours des éléments visibles sur l'image.

Avantageusement, cette étape de détection de contours 110 n'est réalisée que sur une partie de l'image, également appelée région d'intérêt, par exemple une partie inférieure de l'image puisqu'on ne cherche à détecter que les rails à proximité du véhicule ferroviaire. Cela permet de ne pas s'encombrer de certains éléments, comme les poteaux 12 lointains ou les rails opposés 20.

Afin d'affiner la détection, seulement certains ensembles de points sont avantageusement pris en compte pour la suite du procédé. A cet effet, le procédé comporte une étape 120 de sélection de points, parmi les points déterminés par l'étape de détection de contours 110, tels que les points sélectionnés sont des groupes de points alignés sensiblement verticalement, ou plus généralement formant un angle inférieur à un angle prédéterminé avec une direction verticale de l'image. Ceci permet d'éliminer des groupements de points alignés horizontalement, qui ne correspondent manifestement pas à des rails.

Le procédé comporte ensuite une étape 130 de génération de lignes, réalisée sur la base des points sélectionnés.

Ces lignes correspondent sensiblement à certains contours détectés sur l'image. Les lignes sont par exemple des courbes, notamment de polynômes du second degré ou des hyperboles, générées de manière connue en soi à partir des points sélectionnés. Avantageusement, une courbe n'est retenue que si les points sélectionnés ayant permis de générer cette courbe, couvrent au moins 40 % de la hauteur de la région d'intérêt, ce seuil étant réglable en fonction du niveau de confiance que l'on attribue à la détection.

Généralement, suite à cette étape, certains éléments de l'image peuvent donner lieu à une pluralité de lignes similaires. Le procédé comporte donc une étape 140 de groupement de lignes proches et similaires entre elles, chaque groupement de lignes étant alors remplacé par une ligne représentative, notamment une ligne moyenne ou une ligne réalisée à partir du plus grand nombre de points sélectionnés.

On a représenté sur la figure 3 des exemples de lignes représentatives retenues suite aux étapes 110 à 140. En particulier, on a représenté des lignes 24 correspondant aux bords 16 de la chaussée 11, des lignes 26 correspondant aux rails 10, des lignes 28 correspondant à l'ombre 14 d'un poteau 12, des lignes 30 correspondant aux rebords 22, et des lignes 32 correspondant aux contours du quai 18.

Le procédé comporte ensuite une étape 150 de recherche, parmi ces lignes représentatives 24, 26, 28, 30, 32, d'une paire de lignes séparées l'une de l'autre d'une distance prédéfinie. En effet, connaissant la distance entre deux rails 10, il est possible de définir ladite distance prédéfinie entre deux rails d'une image capturée. Ainsi, lorsque deux lignes 26 sont distantes d'une telle distance prédéterminée, on déduit que ces deux lignes 26 correspondent probablement aux deux rails 10. Par exemple, l'étape 150 de recherche d'une paire de lignes séparées l'une de l'autre d'une distance prédéfinie est réalisée sur la base d'un minimum d'écart entre la distance entre les lignes et la distance prédéfinie sur l'ensemble de la région d'intérêt.

Le procédé comporte ensuite une étape 160 de vérification de la rectitude des lignes de la paire de lignes 26, et de leur alignement avec des directions de référence prédéterminées, correspondant à des directions attendues pour des rails rectilignes s'étendant devant le véhicule ferroviaire.

Dans le cas où les lignes 26 sont considérées comme droites et alignées avec les directions de référence, on déduit que les lignes 26 correspondent bien à des rails 10, et que le véhicule se trouve actuellement sur une partie rectiligne des rails 10. On passe alors à une étape 170, selon laquelle les rails 10 ont été reconnus.

Dans le cas où les lignes 26 ne sont pas droites, on passe à une étape 180 de comparaison de la paire de lignes 26 présentement déterminées, avec une paire de lignes déterminées sur une image capturée précédemment, à laquelle aura été appliqué le même procédé de détection. En effet, comme indiqué précédemment, des images sont capturées à intervalle régulier, et il est donc possible de comparer les lignes déterminées pour une image avec les lignes déterminées pour une image capturée précédemment.

En particulier, on compare la position des lignes déterminées sur la présente image avec la position des lignes déterminées sur l'image précédente. Dans le cas où ces positions sont proches, c'est-à-dire qu'elles sont éloignées d'une distance inférieure à une valeur prédéterminée, alors ces lignes sont considérées comme l'évolution des lignes précédemment reconnues. On en déduit que les lignes 26 correspondent bien à des rails 10, et que le véhicule se trouve actuellement sur une partie incurvée des rails 10. On passe alors à l'étape 170 selon laquelle les rails 10 ont été reconnus.

Une fois les rails 10 détectés, il est possible de réaliser des étapes de traitement de cette information, notamment pour la détection d'un déraillement ou la détection de collision.

En particulier, le procédé comporte avantageusement une étape de comparaison de la paire de lignes détectées 26 avec des données prédéfinies, correspondant à une position attendue pour les rails 10. Dans le cas où les lignes détectées 26, image après image, s'éloignent des données prédéfinies, on est dans le cas d'un déraillement.

Par ailleurs, le procédé comporte avantageusement une étape de détection d'obstacles, notamment au moyen d'un détecteur embarqué. En cas d'obstacles détectés par ce détecteur, le procédé comporte une étape de comparaison de la position de l'obstacle détecté avec la paire de lignes 26 reconnues. Dans le cas où l'obstacle n'est pas situé sur la voie définie par les paires de lignes 26, alors cet obstacle n'est pas considéré comme gênant pour le véhicule ferroviaire, et peut donc être ignoré. En revanche, dans le cas où la position de l'obstacle recoupe la position de la voie définie par les lignes 26 reconnues, alors l'obstacle est considéré comme situé sur la voie ferrée, et une action appropriée, par exemple un freinage, un avertissement sonore, ou encore lumineux est réalisée pour éviter la collision avec l'obstacle.

Le procédé de détection décrit précédemment peut être réalisé de manière simple au moyen d'un dispositif de détection de rails équipant le véhicule ferroviaire, comportant la caméra, qui est propre à capturer des images en extrémité du véhicule ferroviaire, par exemple en avant, et comportant une unité informatique, incluse ou non dans la caméra, comprenant des moyens de détection de contours sur une image capturée, des moyens de génération de lignes correspondants aux contours détectés sur ladite image et des moyens de recherche, parmi les lignes générées, de paires de lignes sensiblement parallèles et séparées l'une de l'autre d'une distance prédéfinie.

On notera que l'invention n'est pas limitée au mode de réalisation précédemment décrit, mais pourrait présenter diverses variantes sans sortir du cadre des revendications.

## Revendications

1. Procédé de détection de rails (10) sur lesquels circule un véhicule ferroviaire, **caractérisé en ce qu'**il comporte :
- une étape (100) de capture d'une image prise en extrémité dudit véhicule ferroviaire,
- une étape (110) de détection de contours sur ladite image,
- une étape (130) de génération de lignes, correspondant sensiblement aux contours détectés sur ladite image,
- suite à l'étape (130) de génération de lignes, une étape (140) de groupement de lignes proches et similaires entre elles, chaque groupement de ligne étant remplacé par une ligne représentative, et
- une étape (150) de recherche, parmi les lignes générées, d'une paire de lignes (26) séparées l'une de l'autre d'une distance prédéfinie.

2. Procédé de détection selon la revendication 1, dans lequel l'image est capturée à partir d'une vidéo filmée en avant du véhicule ferroviaire.

3. Procédé de détection selon la revendication 1 ou 2, comportant, suite à l'étape (100) de capture d'image, et préalablement à l'étape (110) de détection de contours, une étape (105) de conversion de l'image capturée en niveaux de gris.

4. Procédé de détection selon l'une quelconque des revendications 1 à 3, dans lequel l'étape (110) de détection de contours est réalisée par l'application d'un filtre de Canny à l'image.

5. Procédé de détection selon l'une quelconque des revendications 1 à 3, dans lequel l'étape (110) de détection de contours est réalisée par l'application d'un filtre orientable à l'image.

6. Procédé de détection selon l'une quelconque des revendications précédentes, comportant, suite à l'étape (110) de détection de contours, une étape (120) de sélection de points, correspondant aux contours détectés, telle que les points sélectionnés sont des groupes de points alignés sensiblement verticalement, l'étape (130) de génération de lignes étant réalisée sur la base des points sélectionnés.

7. Procédé de détection selon la revendication 6, dans lequel la ligne représentative, remplaçant chaque groupement de lignes, est une ligne réalisée à partir du plus grand nombre de points sélectionnés.

8. Procédé de détection selon l'une quelconque des revendications précédentes, comportant, suite à l'étape de recherche (150), une étape (160) de vérification de la rectitude des lignes de la paire de ligne.

9. Procédé de détection selon l'une quelconque des revendications précédentes, dans lequel le procédé comporte, en outre, une étape (180) de comparaison de la paire de lignes avec une paire de lignes issue d'une image capturée précédemment à laquelle aura été appliquée le même procédé de détection.

10. Procédé de détection selon l'une quelconque des revendications précédentes, comportant une étape de comparaison de la paire de lignes avec des données prédéfinies, correspondant à une position attendue pour les rails.

11. Procédé de détection selon l'une quelconque des revendications précédentes, comportant une étape de détection d'obstacle, et, en cas d'obstacle détecté, une étape de comparaison de la position de l'obstacle détecté avec la paire de lignes.

12. Dispositif de détection de rails, destiné à équiper un véhicule ferroviaire circulant sur ces rails, le dispositif comportant une caméra propre à capturer au moins une image en extrémité du véhicule ferroviaire, **caractérisé en ce qu'**il comporte :
- des moyens de détection de contours sur une image capturée,
- des moyens de génération de lignes, correspondant sensiblement aux contours détectés, sur ladite image, et
- des moyens de recherche, parmi les lignes générées, d'une paire de lignes sensiblement parallèles et séparées l'une de l'autre d'une distance prédéfinie.
